# EUROPEAN PATENT SPECIFICATION

(11) **EP 3 609 141 B1**
(45) Date of publication and mention of the grant of the patent: **21.04.2021**
(21) Application number: 18187834.9
(22) Date of filing: 07.08.2018
(51) Int. Cl.: H04L 12/709, H04L 12/801

(54) **AN ETHERNET BONDING PROCESSOR AND CORRESPONDING ETHERNET FRAME RECEIVER**
ETHERNET-BONDING-PROZESSOR UND ENTSPRECHENDER ETHERNET FRAME EMPFÄNGER
PROCESSEUR DE LIAISON ETHERNET ET RÉCEPTEUR DE TRAMES ETHERNET CORRESPONDANT

(43) Date of publication of application: 12.02.2020
(73) Proprietor: Nokia Solutions and Networks Oy, 02610 Espoo (FI)
(72) Inventor: Pauwels, Bart Joseph, 2018 Antwerpen (BE)
(74) Representative: IP HILLS NV

(56) References cited:
- US-A1- 2018 183 723
- US-B2- 9 699 102

## Description

### Technical Field

Various example embodiments relate to bonding of plural physical Ethernet interfaces into a single logical Ethernet interface. More particularly, embodiments of the invention relate to backwards compatible bonding of physical data interfaces that transfer Ethernet frames or packets, in a network where also non-bonded transmission takes place.

### Background

Currently, the physical upper bound for the bit rate of an optical bit stream on a single optical wavelength channel across the Optical Distribution Network (abbreviated ODN) of a Passive Optical Network (abbreviated PON) lies at 25 Gigabit per second (abbreviated Gb/s). Some service providers feel that this upper bound is not sufficient, and therefore techniques must be implemented that allow to combine the capacity of N optical wavelength channels across the ODN in a single logical channel with increased upper bound for the bit rate, N being an integer number higher than one. A similar problem may arise in other point-to-multipoint data transmission media like for instance copper links, radio links, etc.

A PON can carry multiple bit streams between the Optical Line Termination (abbreviated OLT) in the Central Office (abbreviated CO) and the Optical Network Unit (abbreviated ONU) in a cabinet or at the subscriber premises. This way, a PON can carry an N-fold of the upper bound on the physical data rate of a single optical wavelength channel. However, that N-fold data rate is not available on an individual OLT-ONU path, which at this time uses only a single wavelength. The capacity on such path remains limited to the upper bound on the physical data rate that can be carried by a single optical wavelength channel, which at present lies at about 25 Gigabit per second (abbreviated Gb/s).

For some applications, for example software upgrade of the ONU equipment, it is felt necessary that this upper boundary can be overcome, by combining multiple optical wavelength channels into a single OLT-ONU path, offering a higher aggregate data rate. However, it is felt equally important that data transfer between the OLT and legacy ONU equipment, capable of using one optical wavelength channel for reception and transmission of data but not supporting bonding of multiple wavelength channels, remains possible on the PON, concurrently with any method for data transfer between the OLT and new ONUs across a bonding group of plural physical wavelength channels on the PON. In other words, any mechanism for bonding multiple physical interfaces at the data layer protocol must be backward compatible with existing PON data layer protocols, as standardized by ITU-T and IEEE.

In general, a number of techniques exist or have been proposed to allow grouping of multiple physical interfaces carrying Ethernet frames or packets into a single logical interface carrying Ethernet frames or packets, and having an aggregate transmission capacity that at least exceeds the capacity of each individual physical member interface of the group, and at best approaches the sum of the transmission capacities of the member physical interfaces of the group.

An atomic Ethernet frame data flow is a flow wherein the order of data frames (or data blocks in case a frame is fragmented) as transmitted by the sending service application must remain unaltered at the receiving service application. This order constraint does not apply to Ethernet frames or packets that are part of different atomic flows. Transmission of Ethernet frames or packets across an aggregate of multiple physical interfaces carrying Ethernet frames or packets, that are bonded into a single logical interface carrying Ethernet frames or packets, by means of an existing or new bonding paradigm, faces the problem of potentially different transmission latencies on each of the physical interfaces carrying Ethernet frames or packets, members of the aggregate logical interface carrying Ethernet frames or packets. Such differences in transmission latency can find their origin at different layers of the applied data transfer mechanism, like for instance the physical layer, the modulation rate, the scheduling phase, etc. These differences in latency between different physical interfaces carrying Ethernet frames or packets, that are bonded into a logical interface carrying Ethernet frames or packets with increased capacity may cause Ethernet frames or packets belonging to the same atomic Ethernet flow to be mis-ordered upon arrival when these data frames were transmitted in a distributed manner across the different member physical links carrying Ethernet frames or packets. Consequently, use of bonded physical media configurations requires technological measures to guarantee that the original Ethernet frame order is preserved at least within atomic data flows of Ethernet frames or packets.

Existing solutions for bonding multiple physical interfaces carrying Ethernet frames or packets insist on avoiding the need for sequence numbering of Ethernet packets belonging to a same atomic Ethernet flow. However, this comes at the cost of increased complexity in the Medium Access Control (abbreviated MAC) logic, caused by the need for strict sequence and transmission delay control across the multiple possible physical paths that become available to each Ethernet frame of the flow as a result of the bonding.

A similar problem occurs for point-to-point optical links between Network Elements (abbreviated NEs). If such NEs are using IEEE 802.3 Ethernet as data layer protocol, the capacity of a logical interface between two NEs can be increased by application of the Link Aggregation Group (abbreviated LAG) concept on multiple physical links.

The Ethernet Link Aggregation Group or LAG concept, introduced by the IEEE 802.3 specification, allows to combine multiple physical links carrying Ethernet frames or packets in a single logical link carrying Ethernet frames or packets between two network elements using Ethernet as data transport layer protocol. Without frame order preserving measures, mis-ordering of Ethernet frames or packets might occur on a LAG. Even at a same nominal rate, actual transmission speeds on the physical links can deviate up to approximately 100 ppm (parts per million). On top of that, consecutive Ethernet frames or packets vary considerably in size and thus in duration. This makes transmission of Ethernet frames or packets across multiple physical member links in a LAG susceptible to transmission latency variation, and hence to mis-ordering of Ethernet frames or packets arriving at different end-points. Basically, LAG specific interface logic avoids this from happening by ensuring that Ethernet frames or packets belonging to a same atomic Ethernet flow, i.e. a flow wherein mis-ordering of frames must be avoided, are confined to a same physical member link of the LAG at least during periods wherein the atomic Ethernet flow exhibits Ethernet frame arrival intervals that are smaller than the maximum potential transmission latency difference between the physical LAG members. This is realized by identifying Ethernet frames or packets of a same atomic Ethernet flow through recognizing frame header fields of which the content is specific and invariant for all frames of that same flow. These header fields are used as argument for a hashing function, the result of which indicates the physical member link of the LAG to be used for transmission of the respective Ethernet frame. The LAG paradigm makes four assumptions that are specific to the physical link data layer protocol. According to a first assumption, the overall data traffic to be conveyed across a LAG aggregating multiple physical links does not consist of a single atomic Ethernet data flow, yet consists of plural atomic Ethernet flows. Only such a traffic profile allows to distribute at all the aggregate load of Ethernet frames or packets to be transported on the logical interface across the multiple physical links in the LAG according to their atomic Ethernet flow membership, while avoiding mis-ordering within a same atomic Ethernet flow. According to a second assumption, the data rate for each of these atomic Ethernet flows is two or more orders of magnitude smaller than the data rate on a physical member link of the LAG. According to a third assumption, the density of the result space of the applied hash function, using the content of fields in the headers of transmitted Ethernet frames or packets that are specific and invariant within each atomic Ethernet flow, is more or less constant. Only a traffic profile with these properties allows to distribute the aggregate load of Ethernet frames or packets to be transported on the logical interface across the multiple physical links in the LAG, in a balanced manner with sufficient statistical probability across all member physical links of the LAG. According to a fourth assumption, the data rate on each of the member physical links of the LAG is about equal. The latter 3 assumptions are not fundamental requirements of the LAG concept, but they heavily determine the efficiency of the LAG and the risk of frame loss on individual physical member links, despite sufficient aggregate transmission capacity. In practice, these assumptions have turned out to be rather common at the time the concept of LAG was introduced, yet they cannot be guaranteed under all conditions and for all service types anymore in large modern networks. As a consequence, the LAG concept has as drawback that it is not very efficient in case the bandwidth of individual atomic Ethernet data flows is not multiple orders of magnitude lower than the bandwidth capacity of each individual physical member link of the logical LAG. Moreover, even if this condition is fulfilled, the static hash function used for distribution of atomic Ethernet data flows still may cause severe load imbalance between the physical member links of the LAG and possibly individual physical path overload in case of pathological distribution of traffic load and flow specific fields. The possible issues with a static hash implementation that allocates flows to physical member links independent of the actual load on these physical member links, can be overcome by a load dependent allocation of a physical member data link in the LAG to a new atomic Ethernet data flow. This however requires a stateful LAG implementation in which a table is kept that records the choice of physical link for each hash result, and an ageing mechanism that frees up entries in the table that have not been accessed for a given amount of time. In yet another variant of the LAG concept, the distribution of Ethernet frames or packets across the multiple physical member links of the LAG is no longer determined by their atomic Ethernet flow membership, but according to a simple Round-Robin scheduling mechanism. This however requires insertion of a sequence number per Ethernet frame, for all Ethernet frames or packets, in order to be able to re-sequence mis-ordered Ethernet frames or packets within each atomic Ethernet flow to deal at least with the transmission latency variation caused by at least Ethernet frame size variation.

On point-to-point bonded physical interfaces that carry Ethernet frames or packets with a single aggregate transmitter and receiver logic which by construction both use the same bonding paradigm, any technological measures taken to preserve or restore the order of Ethernet frames or packets can be applied to all Ethernet frame traffic. Consequently, the frame order preserving or restoring techniques can be disruptive and specific for the bonding configuration and equipment. However, on point-to-multipoint physical interfaces, interconnecting multiple end-points of which new ones are supporting new bonding technology, yet legacy end-points ones may not support bonding and only interface with a single physical medium of the bonding group, any technology deployed to ensure Ethernet frame order preservation at least within atomic Ethernet data flows, must be backwards compatible with pre-bonding Ethernet frame formatting, at least to such level that legacy end-points that do not support bonding can properly parse Ethernet frames or packets with and without bonding supporting attributes, and discard the ones with bonding supporting attributes, as not intended for them.

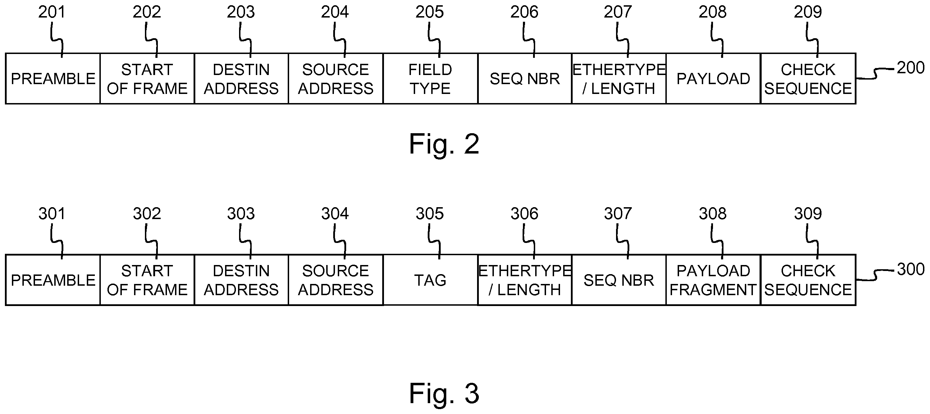

United States Patent US 9,699,102 B2, entitled "Very High Speed Cable Modem for Increasing Bandwidth", describes a bonding processor (26 in FIG. 2) for bonding plural physical interfaces (27 in FIG. 2) carrying Ethernet packets that belong to a single Ethernet data flow (FIG. 3: A). The bonding technology is backwards compatible enabling non-bonded transmissions over the same physical interfaces (Col. 7, In. 63-65). A sequence number is inserted in Ethernet packets of a bonded data flow (Col. 3, In. 12-15) to enable resequencing at the receiver side, and the packets belonging to a bonded flow are distributed over the physical interfaces in line with a load balancing algorithm (Col. 3, In. 29-43). The load balancing may be achieved through a round robin mechanism or alternate scheduling algorithm.

### Summary

Amongst others, it is an object of embodiments of the invention to provide an improved device or method for bonding plural physical Ethernet interfaces into a single logical Ethernet interface, and this in a backwards compatible manner such that both bonded transmissions and non-bonded transmissions can use the same physical interfaces for carrying Ethernet frames or packets. It is also an object of embodiments of the invention to leave the Medium Access Control (abbreviated MAC) layer as much as possible unaffected through complementary bonding. As MAC layers are complex in design, any added functionality requiring coordination of data transfers between multiple MAC functions would multiply the number of possible states and hence also the test effort and number of possible fault states. Maintaining the existing design of the MAC layer, as for example specified in ITU-T G.98x or IEEE 802.3ah standard specifications for optical wavelength-based channels, therefore is an important aim.

The above defined object is achieved, according to a first example aspect of the present disclosure specified by claim 1, by a bonding processor for backwards compatible bonding of plural physical interfaces carrying Ethernet frames or packets into a single logical interface carrying Ethernet frames or packets, allowing bonded transmission of a selected Ethernet data flow from a source network element to a destination network element in a network wherein said physical interfaces carrying Ethernet frames or packets are also used for non-bonded transmission, said bonding processor comprising:
- means for inserting a sequence number in Ethernet frames or packets of said selected Ethernet data flow to thereby generate sequence-numbered Ethernet frames or packets;
- means for distributing said sequence-numbered Ethernet frames or packets across said plural physical interfaces carrying Ethernet frames or packets, according to a load distribution criterion that considers the respective lengths of said sequence-numbered Ethernet frames or packets; and
- means for reserving substantially simultaneous timeslots on said plural physical interfaces carrying Ethernet frames or packets for bonded transmission of said sequence-numbered Ethernet frames or packets.

Thus, embodiments of the invention concern a dedicated bonding processor, typically located at the ingress of the MAC transmitter function and at the egress of the MAC receiver function. The bonding processor introduces a re-sequencing capability using sequence numbers that are inserted in the Ethernet frames or packets of Ethernet data flows that are transmitted over the bonding group. The re-sequencing capability based on sequence numbers avoids the need for tight coordination of data partitioning and data transmission using multiple physical media interfaces, for instance multiple optical wavelength channel MAC transmitters. The sequence numbers are added to the Ethernet frames or packets using a method that is backwards compatible with the IEEE 802.3 Ethernet specification to allow mixing sequence-numbered Ethernet frames or packets for bonded transmission with non-sequence-numbered Ethernet frames or packets for non-bonded transmissions to legacy endpoints over a single physical medium interface, like for instance a single optical wavelength channel. The bonding processor according to embodiments of the invention further introduces a load balancing function across member physical interfaces of a bonding group, the load balancing function considering also the length of each Ethernet frame in addition to its source and destination identifiers. As the length of the payload section of Ethernet frames or packets can vary substantially, ranging for instance from 46 octets to 1500 octets, it is important that the size or length of individual Ethernet frames or packets is considered in the assignment of Ethernet frames or packets to member physical interfaces of a bonding group in order to achieve a balanced load across the member physical interfaces. The load distribution criterion obviously may consider additional parameters like for instance the relative data rate of the respective member physical interfaces. The bonding processor according to embodiments of the invention further also introduces synchronized timeslot reservation amongst bonded physical interfaces such that the Ethernet frames or packets to/from a bonded endpoint are transmitted with little or no time difference on concurrent, same data rate, bonded physical interfaces. Through synchronized reservation of timeslots or more generally frame scheduling opportunities, the need for re-sequencing queuing at the bonded receiver is further reduced. In other words, the bonding processor according to embodiments of the invention avoids large propagation delay differences or scheduling skew between Ethernet frames or packets or frame fragments sent to a same bonding destination through adapted timeslot scheduling for member physical interfaces of a bonding group. This allows to keep the amount of re-sequencing buffering required at the receiver side of a bonding group to restore the order of Ethernet frames or packets in an Ethernet flow within limits.

In embodiments of the bonding processor, as defined by claim 2, the means for inserting a sequence number comprise:
- means for inserting in Ethernet frames or packets a two-octet sequence number field after the Length/Type field that ends the header of the Ethernet frames or packets, the sequence number field comprising a two-octet sequence number to thereby generate the sequence numbered Ethernet frames or packets that can be mixed with non-sequence numbered Ethernet frames or packets of one or more different Ethernet data flow for transmission on a same physical or logical Ethernet interface.

Thus, embodiments of the invention rely on a specific sequence number field that is inserted in each Ethernet frame of one or more transmitted flows of Ethernet frames or packets. The sequence number field is inserted at the Ethernet protocol layer in a manner that is backwards compatible with the existing standard specifications for this layer. The sequence number field has the form of a 2-octet long field compatible with the existing Ethernet packet header format by insertion after the 2-octet Ethertype / Length field that ends a traditional Ethernet frame header. The 2-octet sequence number field is dedicated to contain a sequence number representative for the order of the Ethernet frame in the atomic Ethernet data flow where it forms part of. A bonding processor in the destination receiver is configured to assume the presence of this 2-octet field depending on the MAC destination address and interpret this 2-octet field correctly for re-sequencing

In alternate embodiments of the bonding processor, as defined by claim 3, the means for inserting a sequence number comprise:
- means for inserting in Ethernet frames or packets a four-octet sequence number field after the destination address field and source address field in the Ethernet frames or packets, the sequence number field comprising a two-octet field type code distinguishing the sequence number field from existing field types and a two-octet sequence number to thereby generate the sequence numbered Ethernet frames or packets that can be mixed with non-sequence numbered Ethernet frames or packets of one or more different Ethernet data flow for transmission on a same physical or logical Ethernet interface.

Thus, embodiments of the invention rely on a specific sequence number field that is inserted in each Ethernet frame of one or more transmitted flows of Ethernet frames or packets. The sequence number field is inserted at the Ethernet protocol layer in a manner that is backwards compatible with the existing standard specifications for this layer. The sequence number field has the form of a 4-octet long field compatible with the existing Ethernet packet header format by insertion after the 6-octet long destination address field and 6-octet long source address field. In the 4-octet sequence number field, 2 octets are dedicated to contain a field type code that enables to distinguish the sequence number field from the existing type, length and Virtual Local Area Network Identification (abbreviated VLAN ID) fields. The remaining 2 octets of the 4-octet sequence number field are dedicated to contain a sequence number representative for the order of the Ethernet frame in the atomic Ethernet data flow where it forms part of.

In advantageous embodiments of the bonding processor, as defined by claim 4, the means for distributing the sequence-numbered Ethernet frames or packets across the plural physical Ethernet interfaces comprises means for receiving a backpressure signal from a transmit queue of a physical Ethernet interface that forms part of the plural physical Ethernet interfaces whenever transmission of a next data block can be initiated.

Indeed, the bonding processor must take care not to send more data consecutively on a same bonding group member physical interface for a destination endpoint than can be transmitted in the next single timeslot on that physical interface for that destination endpoint. A backpressure signal from the corresponding transmit queue of the member physical interface may indicate when sending of the next data block for that particular destination endpoint can be initiated. It is noticed that the aggregate size of data blocks scheduled for transmission in a single time slot must be bigger than the latency incurred by queue filling assessment operation and back-pressure signal reception in order to allow for efficient back-to-back transmission of larger amounts of data blocks to the same destination endpoint when necessary.

In embodiments of the bonding processor, as defined by claim 5, the substantially simultaneous timeslots are generated using a common time reference and scheduled at the start of a subframe or superframe in a Passive Optical Network using a data layer protocol backwards compatible with the existing Passive Optical Network data layer protocol as standardized by ITU-T and IEEE.

Thus, coordination of bonded receiver timeslot assignment is possible even across physical MAC devices by using a simple common time reference, for instance a 1 pps clock signal, either locally generated or by a network wide synchronized time setting construct, with accuracy better than the time slot scheduling granularity. The scheduling order of timeslots can be chosen such that simultaneous scheduling of timeslots for a same destination endpoint and data priority is achieved in a simple way, for instance by scheduling timeslots for bonded receivers at the start of a subframe or superframe, followed by timeslots for the non-bonded receivers and data priorities.

In embodiments of the bonding processor, as defined by claim 6, the bonded transmission is limited to a subset of data transfer priorities.

Indeed, in order to save on hardware re-sequencing resources in the receiver, the bonded data transfer may be limited to only a sub-set of the supported data transfer priorities to a particular destination endpoint.

In addition to a bonding processor, sample embodiments of the present invention according to a second aspect also relate to an Ethernet frame receiver for receiving Ethernet frames or packets of one or more Ethernet data flow as defined by claim 7, the Ethernet frame receiver comprising:
- means for receiving Ethernet frames or packets transmitted on a same physical or logical Ethernet interface;
- means for assuming or detecting in the Ethernet frames or packets a sequence number field, the sequence number field comprising a sequence number;
- means for distinguishing sequence numbered Ethernet frames or packets of a bonded Ethernet data flow from non-sequence numbered Ethernet frames or packets of one or more different Ethernet data flow based on the destination address or source address or the presence of the sequence number field;
- means for re-sequencing received sequence numbered Ethernet frames or packets of the bonded Ethernet data flow comprising a re-sequencing queue per physical interface that carries Ethernet frames or packets, the head-of-line packets of which are selected based on the sequence number,
wherein the means for re-sequencing are configured to consider the packet associated with missing sequence number as lost when each re-sequencing queue has a head-of-line packet.

Thus, at the receiving side, each member physical medium MAC of a bonding group is unaware of the bonding arrangement. Only in the bonding processor of the receiver, the presence of the sequence number in Ethernet frames or packets is detected, the sequence number is extracted, and the Ethernet frame is put in a resequencing queue corresponding to the bonding group member physical interface it arrived on. The queues are emptied in the order of the consecutive sequence numbers of their head-of-line packets.

If a sequence number of a packet or frame is missing and if all member queues of the bonding group contain a head-of-line packet, meaning there are no empty queues, the packet with the respective sequence number must be considered as lost.

In sample embodiments of the Ethernet frame receiver, as defined by claim 8, the means for re-sequencing are configured to wait a predetermined time for arrival of a packet with absent sequence number when one or more re-sequencing queue is empty.

Thus, if a sequence number is missing and if at least one member queue is empty, the bonding processor at the receiver side must wait for the missing packet to arrive on an empty queue, protected by a time-out limit.

According to a third aspect, sample embodiments of the invention also concern a corresponding bonding method as defined by claim 9, for backwards compatible bonding of plural physical interfaces that carry Ethernet frames or packets by a bonding processor into a single logical interface that carries Ethernet frames or packets, allowing bonded transmission of a selected Ethernet data flow from a source network element to a destination network element in a network wherein the physical interfaces that carry Ethernet frames or packets are also used for non-bonded transmission, the bonding method comprising:
- inserting a sequence number in Ethernet frames or packets of the selected Ethernet data flow to thereby generate sequence-numbered Ethernet frames or packets;
- distributing the sequence-numbered Ethernet frames or packets across the plural physical interfaces that carry Ethernet frames or packets according to a load distribution criterion that considers the respective lengths of the sequence numbered Ethernet frames or packets; and
- reserving substantially simultaneous timeslots on the plural physical interfaces that carry Ethernet frames or packets for bonded transmission of the sequence-numbered Ethernet frames or packets.

According to a fourth aspect, embodiments of the invention also concern a method for receiving Ethernet frames or packets of one or more Ethernet data flow by an Ethernet frame receiver as defined by claim 10, the method comprising:
- receiving Ethernet frames or packets transmitted on a same physical or logical interface carrying Ethernet frames or packets;
- detecting in the Ethernet frames or packets a sequence number field, the sequence number field comprising a sequence number;
- distinguishing sequence numbered Ethernet frames or packets of a bonded Ethernet data flow from non-sequence numbered Ethernet frames or packets of one or more non-bonded Ethernet data flow based on the destination address or source address or the presence of the sequence number field;
- re-sequencing received sequence numbered Ethernet frames or packets of the bonded Ethernet data flow by storing the sequence numbered Ethernet frames or packets in re-sequencing queues per physical interface carrying Ethernet frames or packets and selecting the head-of-line packets from the re-sequencing queues based on the sequence number; and
- considering the packet associated with a missing sequence number as lost when each re-sequencing queue has a head-of-line packet.

### Brief Description of the Drawings

Some example embodiments will now be described with reference to the accompanying drawings.
Fig. 1 shows a Passive Optical Network comprising sample embodiments of the Ethernet frame processor 191 and Ethernet frame receiver 152 according to the invention;
Fig. 2 illustrates sequence numbering of Ethernet frames or packets 200 in a first sample embodiment of the Ethernet frame processor according to the invention;
Fig. 3 illustrates sequence numbering of Ethernet frames or packets 300 in a second sample embodiment of the Ethernet frame processor according to the invention;
Fig. 4 illustrates timeslot scheduling in sample embodiments of the Ethernet frame processor according to the invention; and
Fig. 5 shows an example embodiment of a suitable computing system 600 for performing one or several steps in embodiments of the invention.

### Detailed Description of Embodiment(s)

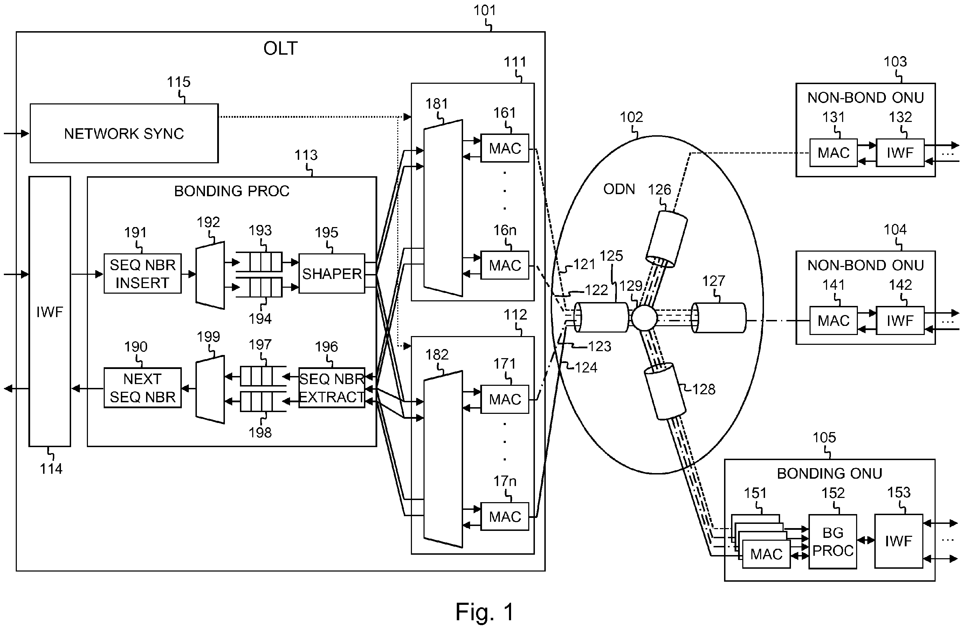

Fig. 1 shows a Passive Optical Network comprising an Optical Line Termination 101 (abbreviated OLT) located in the Central Office (abbreviated CO), an Optical Distribution Network 102 (abbreviated ODN), and three Optical Network Units 103, 104, 105 (abbreviated ONUs) located in Customer Premises Equipment (abbreviated CPE) or in an intermediate cabinet. The OLT 101 comprises a first optical transceiver 111 and second optical transceiver 112, a bonding processor 113, an interworking function 114 (abbreviated IWF) and a network synchronization unit 115. The first transceiver 111 has an optical multiplexer/demultiplexer 181 and n PON Medium Access Control units 161 ... 16n (abbreviated MAC units), n being a positive integer number. Similarly, the second transceiver 112 has an optical multiplexer/demultiplexer 182 and n PON Medium Access Control units 171 ... 17n, n being a positive integer number. The PON MAC units 161 ... 16n, 171 ... 17n each control access to/from a single physical interface carrying Ethernet frames or packets, represented by a single wavelength channel in Fig. 1. MAC unit 161 for instance controls access to/from a single wavelength channel 121 that is represented by a short-dashed line in Fig. 1; MAC unit 16n controls access to/from a single wavelength channel 122 that is represented by a long-dashed line in Fig. 1; MAC unit 171 controls access to/from a single wavelength channel 123 that is represented by a dot-dashed line in Fig. 1; and MAC unit 17n controls access to/from a single wavelength channel 124 that is represented by a solid line in Fig. 1. Bonding processor 113 comprises a sequence number insertion unit 191, a demultiplexer or load balancer 192, per-channel queues 193 and 194, a per-channel transmit shaper 195, a per-channel receiving sequence number extraction unit 196, per-bonding type, channel and ONU receiving queues 197 and 198, a multiplexer 199, and a next sequence number comparison unit 190. The ODN 102 comprises optical fibres 125, 126, 127 and 128 and optical splitters/multiplexers 129 coupling the ONUs 103, 104 and 105 to the OLT 101. The optical fibres 125, 126, 127 and 128 each convey the four earlier mentioned single wavelength channels 121, 122, 123 and 124. The first ONU 103 is a legacy ONU that does not support bonding. The first ONU 103 is configured to receive/transmit Ethernet frames or packets via single wavelength channel 121 and thereto comprises a MAC unit 131 and interworking function 132. The second ONU 104 also is a legacy ONU that does not support bonding. This second ONU 104 is configured to receive/transmit Ethernet frames or packets via single wavelength channel 123 and thereto comprises a MAC unit 141 and interworking function 142. The third ONU 105 supports bonding of multiple single wavelength channels 121, 122, 123 and 124 into a single logical interface and thereto comprises per-channel MAC units 151, a bonding group processor 152 and an interworking function 153.

In the PON drawn in Fig. 1, OLT 101 communicates with bonding ONU 105 using a bonded group of four physical interfaces carrying Ethernet frames or packets representing four single wavelength channels 121, 122, 123 and 124 across which Ethernet frames or packets destined for ONU 105 are transmitted in a load-balanced manner. In order to enable the OLT 101 to use the single wavelength channel 121 also for communication with legacy ONU 103 and to use the single wavelength channel 123 also for communication with legacy ONU 104 hence enabling to mix bonding ONU 105 with legacy ONUs 103 and 104, using the same physical medium interfaces at least partially, Ethernet frames or packets transmitted by OLT 101 become sequence numbered in a backwards compatible manner. Ethernet frames or packets received from interworking function 114 are sequence numbered by the sequence number insertion unit 191. The sequence numbering is done per destination, which means that Ethernet frames or packets of a data flow destined to ONU 105 are sequence numbered separately from Ethernet frames or packets of a data flow destined to another bonding ONU.

The sequence numbering applied by a first embodiment of sequence number insertion unit 191 is illustrated by Fig. 2. Ethernet frame 200 traditionally contains a 7-octet preamble field 201 with pattern of alternating 1 and 0 bits allowing network devices to synchronize their receiver clocks, a 1-octet start of frame delimiter field 202 with a predetermined bit pattern allowing byte synchronization and marking a new frame, a 6-octet destination address field 203 with MAC address of the destination endpoint, a 6-octet source address field 204 with MAC address of the source endpoint, a 2-octet Ethertype or length field 207 with indication of the type of Ethernet frame or the length of the Ethernet frame, a payload section 208 of variable length ranging from 46 octets up to 1500 octets, and 4-octet frame check sequence field 209 with 32 bit long cyclic redundancy check (abbreviated CRC) sequence. As a result of the operation of a first embodiment of the sequence number insertion unit 191, Ethernet frame 200 further contains a 4-octet sequence number field consisting of a 2-octet field type code 205 and a 2-octet sequence number 206. A first embodiment of the sequence number insertion unit 191 hence exploits the optional 4-octet tag foreseen in the IEEE 802.3 Ethernet standard to insert immediately after the destination address and source address a 2-octet field type code 205, i.e. a predetermined 16-bit sequence that enables to distinguish the sequence number field from existing type, length and VLAN ID field types, and a 16-bit sequence number 206. The 16-bit sequence number is applied per Ethernet data flow such that successive frames of an atomic Ethernet data flow carry subsequent numbers, as a result of which the order of Ethernet frames or packets can be restored in any atomic Ethernet data flow based on the sequence numbers.

The sequence numbering applied by a second embodiment of sequence number insertion unit 191 is illustrated by Fig. 3. Ethernet frame 300 according to the standard IEEE 802.3 contains a 7-octet preamble field 301 with pattern of alternating 1 and 0 bits allowing network devices to synchronize their receiver clocks, a 1-octet start of frame delimiter field 302 with a predetermined bit pattern allowing byte synchronization and marking a new frame, a 6-octet destination address field 303 with MAC address of the destination endpoint, a 6-octet source address field 304 with MAC address of the source endpoint, an optional 4-octet tag field 305, a 2-octet Ethertype or length field 306 with indication of the type of Ethernet frame or the length of the Ethernet frame, a payload section 308 of variable length ranging from 46 octets up to 1500 octets, and 4-octet frame check sequence field 309 with 32 bit long cyclic redundancy check (abbreviated CRC) sequence. As a result of the operation of a second embodiment of the sequence number insertion unit 191, Ethernet frame 300 further contains a 2-octet sequence number field 307 containing a 2-octet sequence number. This 2-octet sequence number field 307 is inserted immediately after the Ethertype / Length field 306 that ends the Ethernet frame header. The 16-bit sequence number is applied per Ethernet data flow such that successive frames of an atomic Ethernet data flow carry subsequent numbers, as a result of which the order of Ethernet frames or packets can be restored in any atomic Ethernet data flow based on the sequence numbers. Insertion of a few octets in Ethernet frames or packets is not an issue in state-of-the-art packet processing logic. A bonding processor in the destination bonded ONU can thus be configured to interpret the sequence number field 307 correctly for re-sequencing, depending on the destination MAC identifier.

The sequence numbered Ethernet frames or packets are demultiplexed or distributed across per-channel queues 193, 194 by demultiplexer / load balancer 192 according to some load distribution algorithm. The load balancer 192 distributes Ethernet frames or packets for a particular destination ONU with inserted sequence number in a more or less load balanced manner across the member wavelength channels 121-124 of the target bonding group, taking into account the length of each Ethernet frame, and possibly other parameters that determine the aggregate load on a particular channel, like the number of bonded or non-bonded ONUs served by the channel, the aggregate bandwidth on the channel, the share of bandwidth per ONU on the channel, or other. The load balancer 192 takes care not to assign more data destined to the same ONU consecutively on a same bonding group member channel MAC than can be transmitted in the next single timeslot on that channel for that ONU. A back-pressure signal from the corresponding transmit queue of the bonding group member channel MAC, for instance 193 or 194, indicates when sending of the next data block for that ONU can be initiated. It is noticed that the aggregate size of the data blocks scheduled for transmission in a single time slot must be bigger than the latency incurred by queue filling assessment operation and back-pressure signal reception in order to allow for efficient back-to-back transmission of larger amounts of data blocks to a same ONU when necessary.

Shaper 195 schedules the transmission of the Ethernet frames or packets by selecting Ethernet frames or packets from the per-channel queues 193, 194 and assigning the selected Ethernet frames or packets to the respective MAC units 161 ... 16n, 171 ... 17n for transmission thereby over the respective physical single wavelength Ethernet interfaces. In between the shaper 195 and the MAC units 161 ... 16n, 171 ... 17n, the transceivers 111 and 112 comprise a downstream/upstream multiplexer/demultiplexer to separate downstream traffic transmitted to ONUs 103, 104 and 105 by OLT 101 from upstream traffic received from ONUs 103, 104 and 105 by OLT 101. Ethernet frames or packets received by the MAC units 161 ... 16n, 171 ... 17n are routed to sequence number extraction unit 196 by the multiplexer/demultiplexers 181 and 182. The sequence number extraction unit 196 stores the received Ethernet frames or packets in queues 197, 198, which queue Ethernet frames or packets that either are not carried over bonded channels, and do not contain re-sequencing numbers, or Ethernet frames or packets that are carried on a particular shared media channel, in a different queue per all non-bonding traffic and optional priority, or per channel and ONU and optional priority, and the demultiplexer 199 serves the different queues 197, 198 such that the next sequence number Ethernet frame of an Ethernet flow becomes forwarded to the interworking function 114 via next sequence number comparison unit 190. The demultiplexer 199 and next sequence number comparison unit 190 in other words re-sequence the received Ethernet frames or packets received from bonding ONUs 105 such that any possible disorder resulting from the bonding is restored before the Ethernet frames or packets are transferred to a different communications network by interworking function 114. The sequence number extraction unit 196 stores the received Ethernet frames or packets from legacy ONUs 103, 104 in a separate non-bonding queue 200. The scheduler 201 offers access for the single non-bonded ONU queue and for the multiple bonded ONU channel queue groups to the IWF 114.

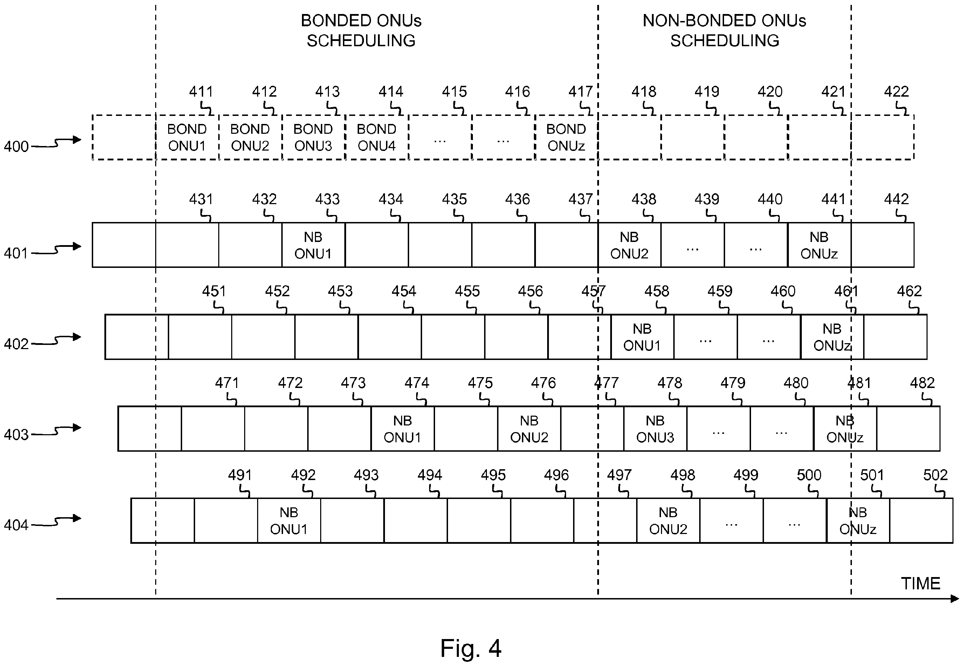

The operation of the shaper or scheduler 195 is illustrated by Fig. 4. Therein, 401 represents a sequence of subsequent timeslots 431-442 for transmission on wavelength channel 121, 402 represents a sequence of subsequent timeslots 451-462 for transmission on wavelength channel 122, 403 represents a sequence of subsequent timeslots 471-482 for transmission on wavelength channel 123, and 404 represents a sequence of subsequent timeslots 491-502 for transmission on wavelength channel 124. The timeslots in 401, 402, 403 and 404 are not aligned because of varying transmission latencies between the different channels 221-224 that form part of a bonding group. The transmission ONU timeslot schedulers 195, 196 at the OLT side, for both down- and upstream, of all bonding group member wavelength channel MACs, are coordinated somehow for bonded ONUs. This is illustrated in Fig. 4 by 400 which shows that timeslots for a same bonded ONU, for instance BOND ONU1, is reserved more or less simultaneously on all member wavelength channels, such that the Ethernet frames or packets transmitted to / from that bonded ONU are sent with little time difference on all concurrent same-data rate wavelength channels. More particularly, the schedulers are configured such that transmissions to/from a first bonding ONU, BOND ONU1, take place in timeslot 431 on channel 121, in timeslot 451 on channel 122, in timeslot 471 on channel 123 and in timeslot 491 on channel 124, the timeslots 431, 451, 471 and 491 all starting within time interval 411 reserved by the schedulers for synchronized transmission to/from BOND ONU1. In a similar way, the transmissions to/from BOND ONU2, BOND ONU3, BOND ONU4 ... BOND ONUz are synchronized across the member wavelength channels of the bonding group to take place in timeslots that respectively start in time intervals 412, 413, 414 ... 417. Such synchronized scheduling of timeslots for bonded ONUs minimizes the need for re-sequencing queuing at the receiver side. Any propagation delay differences and data transfer contention between member wavelength channel MACs is resolved in the same process. Consecutively accessed timeslots for the same ONU and data priority on the different wavelength channels can be staggered in time to achieve an optimal timing which even compensates for delays in the transfer of data from the bonding group processor 113 to the different wavelength channel MACs participating in the dedicated bonding group for a particular ONU. A failing or repaired wavelength channel can be excluded or included automatically and very quickly by adapting the scheduler. Unused bonded ONU timeslots do not have to be wasted. If the transmitting wavelength channel MAC timeslot scheduler detects that actually no data is available to fill the bonded ONU timeslot, it can still grant the slot to any non-bonded ONU with data waiting, as for instance illustrated in Fig. 4 where a first non-bonding ONU, named NB ONU1, uses timeslots 433, 474 and 492, and where a second non-bonding ONU, named NB ONU2, uses timeslot 476.

Coordination of bonded ONU timeslot assignment wavelength is made possible, even across physical MAC devices, by using a simple common time reference, for instance a 1 pps clock signal, either locally generated by network synchronization unit 115, or by a network wide synchronized time setting construct, with accuracy better than the time slot scheduling granularity. The scheduling order of ONU timeslots can be chosen such that simultaneous scheduling of timeslots for a same ONU and data priority is achieved in a simple way, for instance by scheduling timeslots 431-437, 451-457, 471-477, 491-497 for bonded ONUs starting in time intervals 411-417 at the beginning of a subframe or superframe, followed by timeslots 438-442, 458-462, 478-482, 498-502 for the non-bonded ONUs starting in time intervals 418-421. Again, any timeslots on particular wavelength channels for bonded ONUs that are not used, because not participating in the bonded access, or because insufficient data is available for transmission during that timeslot, can be filled by data traffic to ONUs and data priorities not using bonded data transfer.

Referring again to Fig. 1, the bonding ONU 105 has a bonding group processor 152 that is configured to detect or assume presence of the sequence number field in Ethernet frames or packets that are received via the plural bonded interfaces 151, and to re-sequence Ethernet frames or packets belonging to a single atomic Ethernet flow and possibly disordered as a consequence of latency variations between the different single wavelength channels 121, 122, 123, 124 over which these Ethernet frames or packets have been sent as a result of the bonding. In an implementation with per-channel queues an Ethernet packet is put in the re-sequencing queue corresponding to the bonding group member channel it arrived on. The queues are emptied in the order of the consecutive sequence numbers of their Head of Line packets. If a sequence number is missing and all member queues contain a Head of Line packet, the packet with the respective sequence number must be considered as lost. If a sequence number is missing and at least one queue is empty, the bonding group processor must wait for the missing packet to arrive on an empty queue, protected by a limited time-out. The re-sequencing queue size N per member wavelength channel, source and priority equals the maximum size of a scheduling slot multiplied by the maximum number of bonded wavelength channels, depending on the chosen distribution discipline at the transmitting bonding processor and implementation artefacts.

The properly ordered Ethernet frames or packets are handed over to the interworking function 153 for transfer to a different communication network in case the ONU 105 forms part of a cabinet or for transfer to higher layer applications in case the ONU 105 forms part of customer premises equipment.

The legacy ONUs 103 and 104 in parallel continue to receive Ethernet frames or packets that are transmitted using single wavelength channels 121 and 123 that are also to convey part of the bonded traffic destined for bonding ONU 105. Ethernet frames or packets destined for these legacy ONUs 103 and 104 continue to arrive in proper order as they are sent sequentially over a single wavelength channel. The respective MAC units 131 and 141 consequently can process these Ethernet frames or packets in the traditional way and hand-over the Ethernet frames or packets respectively to interworking functions 132 and 142 without any re-sequencing needs. Ethernet frames or packets that are sent over the single wavelength channels 121 or 123 and which arrive at legacy ONUs 103 or 104 although they are not destined for these ONUs, are discarded by these ONUs because they contain a different destination address or ONU identifier. They are sequence numbered Ethernet frames or packets that are destined for bonding ONU 105 and represent partial traffic of the bonding group. Although they are sequence numbered and arrive at the legacy ONUs 103 and 104, they will not prevent the legacy ONUs 103 and 104 from recognizing and processing Ethernet frames or packets that are really intended for them. The backwards compatible sequence numbering introduced to enable sequence restoration in bonded groups, does not prevent to mix such bonded traffic with non-bonded traffic and allow deployment of bonding ONUs in a network with legacy ONUs, both types of ONUs using the same physical medium interfaces, e.g. the same optical wavelength channels in the example of a PON.

It is noticed that bonded data transfer may be limited to only a sub-set of the supported data transfer priorities to a particular ONU, in order to save on hardware re-sequencing resources in the bonding processors. Typically, massive data transfer to a particular ONU, like for instance a software update, is not required with multiple priorities at the same time.

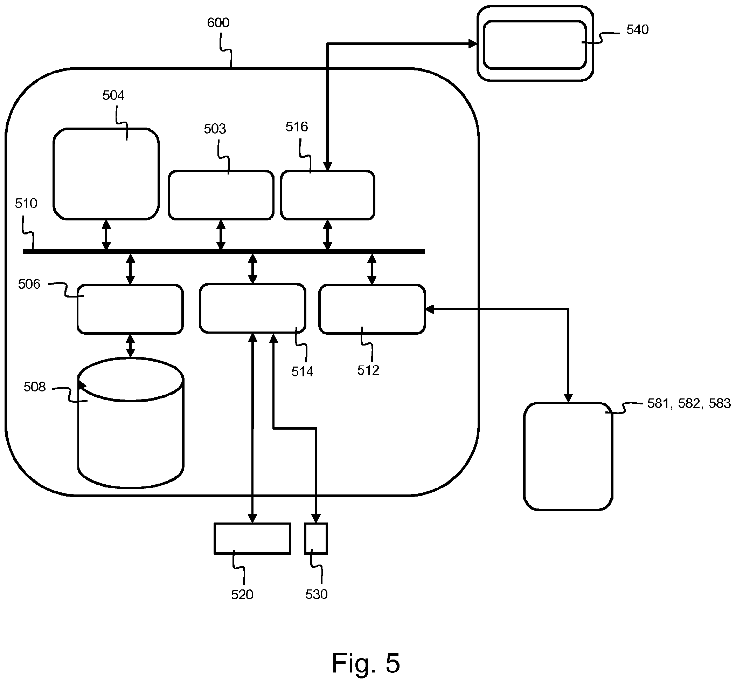

Fig. 5 shows a suitable computing system 600 enabling to implement embodiments of the device and method for bonding according to the invention. Computing system 600 may in general be formed as a suitable general-purpose computer and comprise a bus 510, a processor 503, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 600. Processor 503 may include any type of conventional processor or microprocessor that interprets and executes programming instructions. Local memory 504 may include a random-access memory (RAM) or another type of dynamic storage device that stores information and instructions for execution by processor 503 and/or a read only memory (ROM) or another type of static storage device that stores static information and instructions for use by processor 503. Input interface 514 may comprise one or more conventional mechanisms that permit an operator or user to input information to the computing device 600, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more interfaces that carry Ethernet frames or packets, that enables computing system 600 to communicate with other devices and/or systems, for example with other computing devices 581, 582, 583. The communication interface 512 of computing system 600 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, ... could be used. Computing system 600 could thus correspond to the bonding group processors 113 or 152 in the embodiments illustrated by Fig. 1.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments. The present embodiments are therefore to be considered in al respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A bonding processor (113) for backwards compatible bonding of plural physical interfaces (121, 122, 123, 124) carrying Ethernet frames or packets into a single logical interface carrying Ethernet frames or packets, allowing bonded transmission of a selected Ethernet data flow from a source network element (101) to a destination network element (105) in a network wherein said physical interfaces (121, 122, 123, 124) carrying Ethernet frames or packets are also used for non-bonded transmission, said bonding processor (133) comprising:
- means (191) for inserting a sequence number (206; 307) in Ethernet frames or packets of said selected Ethernet data flow to thereby generate sequence-numbered Ethernet frames or packets (200; 300);
- means (192, 193) for distributing said sequence-numbered Ethernet frames or packets (200; 300) across said plural physical interfaces (121, 122, 123, 124) carrying Ethernet frames or packets according to a load distribution criterion,
**CHARACTERIZED IN THAT** said load distribution criterion considers the respective lengths of said sequence-numbered Ethernet frames or packets (200; 300);
and said bonding processor (133) further comprises:
- means (195) for reserving substantially simultaneous timeslots (431, 451, 471, 491) on said plural physical interfaces (121, 122, 123, 124) carrying Ethernet frames or packets for bonded transmission of said sequence-numbered Ethernet frames or packets (200; 300).

2. A bonding processor (113) according to claim 1, wherein said means (191) for inserting a sequence number (307) comprise:
- means for inserting in Ethernet frames or packets a two-octet sequence number field (307) after the Length/Type field (306) that ends the header of said Ethernet frames or packets, said sequence number field comprising a two-octet sequence number to thereby generate said sequence numbered Ethernet frames or packets (300) that can be mixed with non-sequence numbered Ethernet frames or packets of one or more different Ethernet data flow for transmission on a same physical or logical Ethernet interface.

3. A bonding processor (113) according to claim 1, wherein said means (191) for inserting a sequence number (306) comprise:
- means for inserting in Ethernet frames or packets a four-octet sequence number field after the destination address field (203) and source address field (204) in said Ethernet frames or packets, said sequence number field comprising a two-octet field type code (205) distinguishing said sequence number field from existing field types and a two-octet sequence number (206) to thereby generate said sequence numbered Ethernet frames or packets (200) that can be mixed with non-sequence numbered Ethernet frames or packets of one or more different Ethernet data flow for transmission on a same physical or logical Ethernet interface.

4. A bonding processor (113) according to one of the preceding claims, wherein said means (192, 193) for distributing said sequence-numbered Ethernet frames or packets across said plural physical Ethernet interfaces comprises means for receiving a backpressure signal from a transmit queue of a physical Ethernet interface that forms part of said plural physical Ethernet interfaces whenever transmission of a next data block can be initiated.

5. A bonding processor (113) according to one of the preceding claims, wherein said substantially simultaneous timeslots (431, 451, 471, 491) are generated using a common time reference and scheduled at the start of a subframe or superframe in a Passive Optical Network using a data layer protocol backwards compatible with the existing Passive Optical Network data layer protocol as standardized by ITU-T and IEEE.

6. A bonding processor (113) according to one of the preceding claims, wherein said bonded transmission is limited to a subset of data transfer priorities.

7. An Ethernet frame receiver (101; 105) for receiving Ethernet frames or packets of one or more Ethernet data flow, said Ethernet frame receiver (101; 105) comprising:
- means (111, 112; 151) for receiving Ethernet frames or packets transmitted on a same physical or logical Ethernet interface;
- means (196; 152) for detecting in said Ethernet frames or packets a sequence number field (206; 307), said sequence number field (206; 307) comprising a sequence number;
- means (196; 152) for distinguishing sequence numbered Ethernet frames or packets of a bonded Ethernet data flow from non-sequence numbered Ethernet frames or packets of one or more different Ethernet data flow based on the destination address or source address or presence of said sequence number field;
- means (197, 198, 199, 190; 152) for re-sequencing received sequence numbered Ethernet frames or packets of said bonded Ethernet data flow comprising a re-sequencing queue (197, 198) per physical interface that carries Ethernet frames or packets the head-of-line packets of which are selected based on said sequence number,
**CHARACTERISED IN THAT** said means for re-sequencing (197, 198, 199, 190) are configured to consider the packet associated with a missing sequence number as lost when each re-sequencing queue has a head-of-line packet.

8. An Ethernet frame receiver (101, 105) according to claim 7, wherein said means for re-sequencing (197, 198, 199, 190) are configured to wait a predetermined time for arrival of a packet with absent sequence number when one or more resequencing queue is empty.

9. A bonding method for backwards compatible bonding of plural physical interfaces (121, 122, 123, 124) carrying Ethernet frames or packets by a bonding processor (113) into a single logical interface carrying Ethernet frames or packets, allowing bonded transmission of a selected Ethernet data flow from a source network element (101) to a destination network element (105) in a network wherein said physical interfaces (121, 122, 123, 124) carrying Ethernet frames or packets are also used for non-bonded transmission, said bonding method comprising:
- inserting a sequence number in Ethernet frames or packets of said selected Ethernet data flow to thereby generate sequence-numbered Ethernet frames or packets (200; 300);
- distributing said sequence-numbered Ethernet frames or packets (200; 300) across said plural physical interfaces (121, 122, 123, 124) carrying Ethernet frames or packets according to a load distribution criterion,
**CHARACTERIZED IN THAT** said load distribution criterion considers the respective lengths of said sequence numbered Ethernet frames or packets (200; 300);
and said bonding method further comprises:
- reserving substantially simultaneous timeslots (431, 451, 471, 491) on said plural physical interfaces (121, 122, 123, 124) carrying Ethernet frames or packets for bonded transmission of said sequence-numbered Ethernet frames or packets (200; 300).

10. A method for receiving Ethernet frames or packets of one or more Ethernet data flow by an Ethernet frame receiver (101; 105), said method comprising:
- receiving Ethernet frames or packets transmitted on a same physical or logical interface carrying Ethernet frames or packets;
- detecting in said Ethernet frames or packets a sequence number field (206; 307), said sequence number field (206; 307) comprising a sequence number;
- distinguishing sequence numbered Ethernet frames or packets (200; 300) of a bonded Ethernet data flow from non-sequence numbered Ethernet frames or packets of one or more non-bonded Ethernet data flow based on the destination address or source address or presence of said sequence number field (206; 307);
- re-sequencing received sequence numbered Ethernet frames or packets (200; 300) of said bonded Ethernet data flow by storing said sequence numbered Ethernet frames or packets (200; 300) in re-sequencing queues (197, 198) per physical interface carrying Ethernet frames or packets and selecting the head-of-line packets from said re-sequencing queues (197, 198) based on said sequence number,
**CHARACTERISED IN THAT** said method comprises considering the packet associated with a missing sequence number as lost when each re-sequencing queue has a head-of-line packet.

## Patentansprüche

1. Bondingprozessor (113) zum rückwärtskompatiblen Bonden einer Vielzahl von physischen Schnittstellen (121, 122, 123, 124), die Ethernetframes oder -pakete transportieren, zu einer einzelnen logischen Schnittstelle, die Ethernetframes oder - pakete transportiert, was eine gebondete Übertragung eines ausgewählten Ethernetdatenstroms von einem Quellnetzwerkelement (101) zu einem Zielnetzwerkelement (105) in einem Netzwerk erlaubt, wobei die physischen Schnittstellen (121, 122, 123, 124), die Ethernetframes oder -pakete transportieren, auch für eine nicht gebondete Übertragung verwendet werden, wobei der Bondingprozessor (133) Folgendes umfasst:
- Mittel (191) zum Einfügen einer Sequenznummer (206; 307) in Ethernetframes oder -pakete des ausgewählten Ethernetdatenstroms, um dadurch sequenziell nummerierte Ethernetframes oder -pakete (200; 300) zu erzeugen;
- Mittel (192, 193) zum Verteilen der sequenziell nummerierten Ethernetframes oder -pakete (200; 300) über die Vielzahl von physischen Schnittstellen (121, 122, 123, 124), die Ethernetframes oder -pakete transportieren, gemäß einem Lastverteilungskriterium,
**dadurch gekennzeichnet, dass** das Lastverteilungskriterium die jeweiligen Längen der sequenziell nummerierten Ethernetframes oder -pakete (200; 300) berücksichtigt;
und der Bondingprozessor (133) ferner Folgendes umfasst:
- Mittel (195) zum Reservieren von im Wesentlichen gleichzeitigen Zeitschlitzen (431, 451, 471, 491) an der Vielzahl von physischen Schnittstellen (121, 122, 123, 124), die Ethernetframes oder -pakete transportieren, für eine gebondete Übertragung von sequenziell nummerierten Ethernetframes oder - paketen (200; 300).

2. Bondingprozessor (113) nach Anspruch 1, wobei die Mittel (191) zum Einfügen einer Sequenznummer (307) Folgendes umfassen:
- Mittel zum Einfügen eines zwei Oktette umfassenden Sequenznummernfeldes (307) hinter dem Länge/Typ-Feld (306), das das Ende des Headers der Ethernetframes oder -pakete darstellt, wobei das Sequenznummernfeld eine Sequenznummer aus zwei Oktetten umfasst, um dadurch die sequenziell nummerierten Ethernetframes oder -pakete (300) zu erzeugen, die zur Übertragung auf einer selben physischen oder logischen Ethernetschnittstelle mit nicht sequenziell nummerierten Ethernetframes oder -paketen von einem oder mehreren verschiedenen Ethernetdatenströmen gemischt werden können.

3. Bondingprozessor (113) nach Anspruch 1, wobei die Mittel (191) zum Einfügen einer Sequenznummer (306) Folgendes umfassen:
- Mittel zum Einfügen eines vier Oktette umfassenden Sequenznummernfeldes hinter dem Zieladressfeld (203) und dem Quelladressfeld (204) in den Ethernetframes oder -paketen in die Ethernetframes oder -pakete, wobei das Sequenznummernfeld ein zwei Oktette umfassendes Feld Typcode (205), der das Sequenznummernfeld von vorhandenen Feldtypen unterscheidet, und eine zwei Oktette umfassende Sequenznummer (206) umfasst, um dadurch die sequenziell nummerierten Ethernetframes oder -pakete (200) zu erzeugen, die zur Übertragung auf einer selben physischen oder logischen Ethernetschnittstelle mit nicht sequenziell nummerierten Ethernetframes oder -paketen von einem oder mehreren verschiedenen Ethernetdatenströmen gemischt werden können.

4. Bondingprozessor (113) nach einem der vorhergehenden Ansprüche, wobei die Mittel (192, 193) zum Verteilen der sequenziell nummerierten Ethernetframes oder -pakete über die Vielzahl von physischen Ethernetschnittstellen Mittel zum Empfangen eines Rückstausignals von einer Übertragungswarteschlange einer physischen Ethernetschnittstelle, die einen Teil der Vielzahl von physischen Ethernetschnittstellen bildet, immer wenn eine Übertragung eines nächsten Datenblocks initiiert werden kann, umfassen.

5. Bondingprozessor (113) nach einem der vorhergehenden Ansprüche, wobei die im Wesentlichen gleichzeitigen Zeitschlitze (431, 451, 471, 491) unter Verwendung einer gemeinsamen Zeitreferenz erzeugt und am Anfang eines Unterframes oder eines Superframes in einem passiven optischen Netzwerk unter Verwendung eines Datenschichtprotokolls, das mit dem vorhandenen Datenschichtprotokoll des passiven optischen Netzwerks rückwärtskompatibel ist, wie durch ITU-T und IEEE standardisiert, geplant wird.

6. Bondingprozessor (113) nach einem der vorhergehenden Ansprüche, wobei die gebondete Übertragung auf einen Untersatz von Datenübermittlungsprioritäten beschränkt ist.

7. Ethernetframeempfänger (101; 105) zum Empfangen von Ethernetframes oder -paketen von einem oder mehreren Ethernetdatenströmen, wobei der Ethernetframeempfänger (101; 105) Folgendes umfasst:
- Mittel (111, 112; 151) zum Empfangen von Ethernetframes oder -paketen, die auf einer selben physischen oder logischen Ethernetschnittstelle übertragen werden;
- Mittel (196; 152) zum Detektieren eines Sequenznummernfeldes (206; 307) in den Ethernetframes oder - paketen, wobei das Sequenznummernfeld (206; 307) eine Sequenznummer umfasst;
- Mittel (196; 152) zum Unterscheiden von sequenziell nummerierten Ethernetframes oder -paketen eines gebondeten Ethernetdatenstroms von nicht sequenziell nummerierten Ethernetframes oder -paketen von einem oder mehreren anderen Ethernetdatenströmen auf Basis der Zieladresse oder der Quelladresse oder des Vorhandenseins des Sequenznummernfeldes;
- Mittel (197, 198, 199, 190; 152) zum Neusequenzieren von empfangenen sequenziell nummerierten Ethernetframes oder - paketen des gebondeten Ethernetdatenstroms, der eine Neusequenzierungswarteschlange (197, 198) pro physischer Schnittstelle umfasst, die Ethernetframes oder -pakete transportiert, deren Head-of-Line-Pakete auf Basis der Sequenznummer ausgewählt werden,
**dadurch gekennzeichnet, dass** die Mittel zum Neusequenzieren (197, 198, 199, 190) dazu ausgelegt sind, das Paket, das mit einer fehlenden Sequenznummer verknüpft ist, als verloren zu betrachten, wenn jede Neusequenzierungswarteschlange ein Head-of-Line-Paket aufweist.

8. Ethernetframeempfänger (101, 105) nach Anspruch 7, wobei die Mittel zum Neusequenzieren (197, 198, 199, 190) dazu ausgelegt sind, eine vorbestimmte Zeit auf die Ankunft eines Pakets mit einer fehlenden Sequenznummer zu warten, wenn eine oder mehrere Neusequenzierungswarteschlangen leer sind.

9. Bondingverfahren zum rückwärtskompatiblen Bonden einer Vielzahl von physischen Schnittstellen (121, 122, 123, 124), die Ethernetframes oder -pakete transportieren, durch einen Bondingprozessor (113) zu einer einzelnen logischen Schnittstelle, die Ethernetframes oder -pakete transportiert, was eine gebondete Übertragung eines ausgewählten Ethernetdatenstroms von einem Quellnetzwerkelement (101) zu einem Zielnetzwerkelement (105) in einem Netzwerk erlaubt, wobei die physischen Schnittstellen (121, 122, 123, 124), die Ethernetframes oder -pakete transportieren, auch für eine nicht gebondete Übertragung verwendet werden, wobei das Bondingverfahren Folgendes umfasst:
- Einfügen einer Sequenznummer in Ethernetframes oder - pakete des ausgewählten Ethernetdatenstroms, um dadurch sequenziell nummerierte Ethernetframes oder -pakete (200; 300) zu erzeugen;
- Verteilen der sequenziell nummerierten Ethernetframes oder -pakete (200; 300) über die Vielzahl von physischen Schnittstellen (121, 122, 123, 124), die Ethernetframes oder - pakete transportieren, gemäß einem Lastverteilungskriterium,
**dadurch gekennzeichnet, dass** das Lastverteilungskriterium die jeweiligen Längen der sequenziell nummerierten Ethernetframes oder -pakete (200; 300) berücksichtigt;
und das Bondingverfahren ferner Folgendes umfasst:
- Reservieren von im Wesentlichen gleichzeitigen Zeitschlitzen (431, 451, 471, 491) an der Vielzahl von physischen Schnittstellen (121, 122, 123, 124), die Ethernetframes oder -pakete transportieren, für eine gebondete Übertragung von sequenziell nummerierten Ethernetframes oder - paketen (200; 300).

10. Verfahren zum Empfangen von Ethernetframes oder - paketen von einem oder mehreren Ethernetdatenströmen durch einen Ethernetframeempfänger (101; 105), wobei das Verfahren Folgendes umfasst:
- Empfangen von Ethernetframes oder -paketen, die auf einer selben physischen oder logischen Schnittstelle, die Ethernetframes oder -pakete transportiert, übertragen werden;
- Detektieren eines Sequenznummernfeldes (206; 307) in den Ethernetframes oder -paketen, wobei das Sequenznummernfeld (206; 307) eine Sequenznummer umfasst;
- Unterscheiden von sequenziell nummerierten Ethernetframes oder -paketen (200; 300) eines gebondeten Ethernetdatenstroms von nicht sequenziell nummerierten Ethernetframes oder -paketen von einem oder mehreren nicht gebondeten Ethernetdatenströmen auf Basis der Zieladresse oder der Quelladresse oder des Vorhandenseins des Sequenznummernfeldes (206; 307);
- Neusequenzieren von empfangenen sequenziell nummerierten Ethernetframes oder -paketen (200; 300) des gebondeten Ethernetdatenstroms durch Speichern der sequenziell nummerierten Ethernetframes oder -pakete (200; 300) in Neusequenzierungswarteschlangen (197, 198) pro physischer Schnittstelle, die Ethernetframes oder -pakete transportiert, und Auswählen der Head-of-Line-Pakete aus den Neusequenzierungswarteschlangen (197, 198) auf Basis der Sequenznummer,
**dadurch gekennzeichnet, dass** das Verfahren das Betrachten des Pakets, das mit einer fehlenden Sequenznummer verknüpft ist, als verloren, wenn jede Neusequenzierungswarteschlange ein Head-of-Line-Paket aufweist, umfasst.

## Revendications

1. Processeur de liaison (113) pour une liaison rétro-compatible de nombreuses interfaces physiques (121, 122, 123, 124) transportant des trames ou des paquets Ethernet en une unique interface logique transportant des trames ou des paquets Ethernet, permettant l'émission liée d'un flux de données Ethernet sélectionné, d'un élément de réseau de source (101) à un élément de réseau de destination (105) dans un réseau dans lequel lesdites interfaces physiques (121, 122, 123, 124) transportant des trames ou des paquets Ethernet sont également utilisées pour une émission non liée, ledit processeur de liaison (133) comprenant :
- des moyens (191) pour l'insertion d'un numéro de séquence (206 ; 307) dans des trames ou des paquets Ethernet dudit flux de données Ethernet sélectionné pour ainsi générer des trames ou des paquets Ethernet à numéro de séquence (200 ; 300) ;
- des moyens (192, 193) pour la répartition desdites trames ou desdits paquets Ethernet à numéro de séquence (200 ; 300) sur lesdites nombreuses interfaces physiques (121, 122, 123, 124) transportant des trames ou des paquets Ethernet selon un critère de répartition de charge,
**caractérisé en ce que** ledit critère de répartition de charge considère les longueurs respectives desdites trames ou desdits paquets Ethernet à numéro de séquence (200 ; 300) ;
et ledit processeur de liaison (133) comprend en outre :
- des moyens (195) pour la réservation de créneaux temporels sensiblement simultanés (431, 451, 471, 491) sur lesdites nombreuses interfaces physiques (121, 122, 123, 124) transportant des trames ou des paquets Ethernet pour une émission liée desdites trames ou desdits paquets Ethernet à numéro de séquence (200 ; 300).

2. Processeur de liaison (113) selon la revendication 1, dans lequel lesdits moyens (191) pour l'insertion d'un numéro de séquence (307) comprennent :
- des moyens pour l'insertion, dans des trames ou des paquets Ethernet, d'un champ de numéro de séquence à deux octets (307) après le champ Longueur/Type (306) qui termine l'en-tête desdites trames ou desdits paquets Ethernet, ledit champ de numéro de séquence comprenant un numéro de séquence à deux octets pour ainsi générer lesdites trames ou lesdits paquets Ethernet à numéro de séquence (300) qui peuvent être mélangé(e)s avec des trames ou des paquets Ethernet sans numéro de séquence d'un ou de plusieurs flux de données Ethernet différents pour une émission sur une même interface Ethernet physique ou logique.

3. Processeur de liaison (113) selon la revendication 1, dans lequel lesdits moyens (191) pour l'insertion d'un numéro de séquence (306) comprennent :
- des moyens pour l'insertion, dans des trames ou des paquets Ethernet, d'un champ de numéro de séquence à quatre octets après le champ d'adresse de destination (203) et le champ d'adresse de source (204) dans lesdites trames ou lesdits paquets Ethernet, ledit champ de numéro de séquence comprenant un code de type de champ à deux octets (205) distinguant ledit champ de numéro de séquence par rapport à des types de champ existants et un numéro de séquence à deux octets (206) pour ainsi générer lesdites trames ou lesdits paquets Ethernet à numéro de séquence (200) qui peuvent être mélangé(e)s avec des trames ou des paquets Ethernet sans numéro de séquence d'un ou de plusieurs flux de données Ethernet différents pour une émission sur une même interface Ethernet physique ou logique.

4. Processeur de liaison (113) selon l'une des revendications précédentes, dans lequel lesdits moyens (192, 193) pour la répartition desdites trames ou desdits paquets Ethernet à numéro de séquence sur lesdites nombreuses interfaces physiques comprennent des moyens pour recevoir un signal de surpression à partir d'une file d'attente d'émission d'une interface Ethernet physique qui fait partie desdites nombreuses interfaces Ethernet physiques dès qu'une émission d'un bloc de données suivant peut être initiée.

5. Processeur de liaison (113) selon l'une des revendications précédentes, dans lequel lesdits créneaux temporels sensiblement simultanés (431, 451, 471, 491) sont générés à l'aide d'une référence de temps commune et ordonnancés au début d'une sous-trame ou d'une super-trame dans un réseau optique passif à l'aide d'un protocole de couche de données rétro-compatible avec le protocole de couche de données de réseau optique passif existant tel que normalisé par le secteur de normalisation des télécommunications de l'union internationale des télécommunications, ITU-T, et l'institut des ingénieurs électriciens et électroniciens, IEEE.

6. Processeur de liaison (113) selon l'une des revendications précédentes, dans lequel ladite émission liée est limitée à un sous-ensemble de priorités de transfert de données.

7. Récepteur de trames Ethernet (101 ; 105) pour la réception de trames ou de paquets Ethernet d'un ou de plusieurs flux de données Ethernet, ledit récepteur de trames Ethernet (101 ; 105) comprenant :
- des moyens (111, 112 ; 151) pour la réception de trames ou de paquets Ethernet émis ou émises sur une même interface Ethernet physique ou logique ;
- des moyens (196 ; 152) pour la détection, dans lesdites trames ou lesdits paquets Ethernet, d'un champ de numéro de séquence (206 ; 307), ledit champ de numéro de séquence (206 ; 307) comprenant un numéro de séquence ;
- des moyens (196 ; 152) pour la distinction de trames ou de paquets Ethernet à numéro de séquence d'un flux de données Ethernet lié par rapport à des trames ou des paquets Ethernet sans numéro de séquence d'un ou de plusieurs flux de données Ethernet différents sur la base de l'adresse de destination ou de l'adresse de source ou de la présence dudit champ de numéro de séquence ;
- des moyens (197, 198, 199, 190 ; 152) pour le reséquençage de trames ou de paquets Ethernet à numéro de séquence reçu(e)s dudit flux de données Ethernet lié comprenant une file d'attente de reséquençage (197, 198) par interface physique qui transporte des trames ou des paquets Ethernet dont les paquets en tête de ligne sont sélectionnés sur la base dudit numéro de séquence,
**caractérisé en ce que** lesdits moyens de reséquençage (197, 198, 199, 190) sont configurés pour considérer le paquet associé à un numéro de séquence manquant comme étant perdu lorsque chaque file d'attente de reséquençage possède un paquet en tête de ligne.

8. Récepteur de trames Ethernet (101, 105) selon la revendication 7, dans lequel lesdits moyens de reséquençage (197, 198, 199, 190) sont configurés pour attendre, pendant un temps prédéterminé, l'arrivée d'un paquet à numéro de séquence absent lorsqu'une ou plusieurs files d'attente de reséquençage sont vides.

9. Procédé de liaison pour une liaison rétro-compatible de nombreuses interfaces physiques (121, 122, 123, 124) transportant des trames ou des paquets Ethernet par un processeur de liaison (113) en une unique interface logique transportant des trames ou des paquets Ethernet, permettant l'émission liée d'un flux de données Ethernet sélectionné, d'un élément de réseau de source (101) à un élément de réseau de destination (105) dans un réseau dans lequel lesdites interfaces physiques (121, 122, 123, 124) transportant des trames ou des paquets Ethernet sont également utilisées pour une émission non liée, ledit procédé de liaison comprenant :
- l'insertion d'un numéro de séquence dans des trames ou des paquets Ethernet dudit flux de données Ethernet sélectionné pour ainsi générer des trames ou des paquets Ethernet à numéro de séquence (200 ; 300) ;
- la répartition desdites trames ou desdits paquets Ethernet à numéro de séquence (200 ; 300) sur lesdites nombreuses interfaces physiques (121, 122, 123, 124) transportant des trames ou des paquets Ethernet selon un critère de répartition de charge,
**caractérisé en ce que** ledit critère de répartition de charge considère les longueurs respectives desdites trames ou desdits paquets Ethernet à numéro de séquence (200 ; 300) ;
et ledit procédé de liaison comprend en outre :
- la réservation de créneaux temporels sensiblement simultanés (431, 451, 471, 491) sur lesdites nombreuses interfaces physiques (121, 122, 123, 124) transportant des trames ou des paquets Ethernet pour une émission liée desdites trames ou desdits paquets Ethernet à numéro de séquence (200 ; 300) .

10. Procédé pour la réception de trames ou de paquets Ethernet d'un ou de plusieurs flux de données Ethernet par un récepteur de trames Ethernet (101 ; 105), ledit procédé comprenant :
- la réception de trames ou de paquets Ethernet émis ou émises sur une même interface physique ou logique transportant des trames ou des paquets Ethernet ;
- la détection, dans lesdites trames ou lesdits paquets Ethernet, d'un champ de numéro de séquence (206 ; 307), ledit champ de numéro de séquence (206 ; 307) comprenant un numéro de séquence ;
- la distinction de trames ou de paquets Ethernet à numéro de séquence (200 ; 300) d'un flux de données Ethernet lié par rapport à des trames ou des paquets Ethernet sans numéro de séquence d'un ou de plusieurs flux de données Ethernet non liés sur la base de l'adresse de destination ou de l'adresse de source ou de la présence dudit champ de numéro de séquence (206 ; 307) ;
- le reséquençage de trames ou de paquets Ethernet à numéro de séquence reçu(e)s (200 ; 300) dudit flux de données Ethernet lié par le stockage desdites trames ou desdits paquets Ethernet à numéro de séquence (200 ; 300) dans des files d'attente de reséquençage (197, 198) par interface physique transportant des trames ou des paquets Ethernet et la sélection des paquets en tête de ligne à partir desdites files d'attente de reséquençage (197, 198) sur la base dudit numéro de séquence,
**caractérisé en ce que** ledit procédé comprend la considération du paquet associé à un numéro de séquence manquant comme étant perdu lorsque chaque file d'attente de reséquençage possède un paquet en tête de ligne.
